# EUROPÄISCHE PATENTSCHRIFT

(11) **EP 3 601 834 B1**
(45) Veröffentlichungstag und Bekanntmachung des Hinweises auf die Patenterteilung: **23.09.2020**
(21) Anmeldenummer: 18713194.1
(22) Anmeldetag: 21.03.2018
(51) Int. Cl.: F16D 65/12

(54) **VERBINDUNGSVORRICHTUNG UND VERFAHREN ZUM VERBINDEN EINER BREMSSCHEIBE MIT EINER RADNABE**
CONNECTING DEVICE AND METHOD TO CONNECT A BRAKE DISC WITH A WHEEL HUB
DISPOSITIF DE CONNECTION ET PROCÉDÉ POUR CONNECTER UN DISC DE FREIN AVEC UN MOYEU

(30) Priorität: 27.03.2017 DE 102017106461
(43) Veröffentlichungstag der Anmeldung: 05.02.2020
(73) Patentinhaber: SAF-HOLLAND GmbH, 63856 Bessenbach-Keilberg (DE)
(72) Erfinder: WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2018/057175
(87) Internationale Veröffentlichungsnummer: WO 2018/177843

(56) Entgegenhaltungen:
- EP-A1- 0 127 932
- EP-A1- 0 235 382
- WO-A1-01/96758
- DE-A1- 19 617 154
- DE-B3- 10 351 592
- US-A- 4 102 443

## Beschreibung

Die vorliegende Erfindung betrifft eine Verbindungsvorrichtung zum Verbinden einer Radnabe mit einer Bremsscheibe, sowie ein System aus einer Radnabe, einer Bremsscheibe und einer Verbindungsvorrichtung und ein Verfahren zum Verbinden einer Bremsscheibe mit einer Radnabe.

Aus dem Stand der Technik sind Radlagereinrichtungen zur Lagerung von Fahrzeugrädern hinlänglich bekannt. Wesentliche Bestandteile solcher Radlagereinrichtungen sind eine Radnabe und eine drehfest mit der Radnabe verbundene Bremsscheibe. Typischerweise rotiert die Radnabe hierbei im Betrieb um eine Radachse und in einer Bremssituation wirkt die Bremsscheibe mit Bremsbacken zusammen. Insbesondere bei Nutzfahrzeugen, wie z. B. einem Sattelanhänger, ist es aus sicherheitstechnischen Gründen von größter Bedeutung, eine den zur erwartenden Belastungen angepasste Verbindung zwischen der Bremsscheibe und der Radnabe sicherzustellen.

Hierzu wird die Bremsscheibe mit der Radnabe verschraubt, was mit einem aufwendigen Ausbilden einer Aussparung, die ein Innengewinde aufweist, in der Radnabe einhergeht.

Die DE 196 17 154 A1 betrifft eine Verbindungsvorrichtung zur Anbindung eines Reibringes einer Bremsscheibe an einer Radnabe, wobei Reibring und Nabe je ein Flanschring aufweisen, die axial nebeneinander angeordnet sind und aneinander anliegen.

Die EP 0 127 932 A1 befasst sich mit einer verbesserten Montagestruktur zum Montieren einer Bremsscheibe an einer Nabe mittels Befestigungsmitteln, die Gewindegänge aufweisen.

Die US 4 102 443 A zeigt eine Vorrichtung zum Anordnen einer Bremsscheibe an einem rotierbaren Element unter der Verwendung einer Vielzahl von Befestigungsbolzen.

Die DE 103 51 592 B3, die WO 01/96758 A1 und die EP 0 235 382 A1 zeigen ebenfalls Mittel zur Befestigung einer Bremsscheibe an einer Nabe.

Es ist somit eine Aufgabe der vorliegenden Erfindung eine Verbindungsvorrichtung bereitzustellen, mit der sich einerseits eine Verbindung zwischen der Bremsscheibe und der Radnabe herstellen lässt, ohne dass andererseits die erforderliche Belastbarkeit der entstehenden Verbindung gefährdet wird.
Die Aufgabe wird erfindungsgemäß durch eine Verbindungsvorrichtung mit den Merkmalen des Anspruchs 1, ein System aus Radnabe, Bremsscheibe und Verbindungsvorrichtung und ein Verfahren zum Verbinden einer Bremsscheibe mit einer Radnabe gemäß Anspruch 14 gelöst. Bevorzugte Ausgestaltungen der Erfindung sind in den abhängigen Ansprüchen sowie der nachfolgenden Beschreibung, insbesondere im Zusammenhang mit den beiliegenden Figuren, angegeben.

Erfindungsgemäß ist eine Verbindungsvorrichtung zum Verbinden einer Bremsscheibe mit einer Radnabe vorgesehen, wobei die Verbindungsvorrichtung zumindest teilweise in zumindest einer Ausnehmung der Radnabe anordbar ist und in einen Fixierzustand, in dem die Verbindungsvorrichtung kraftschlüssig mit der Ausnehmung zusammenwirkt, überführbar ist, wobei die Verbindungsvorrichtung eine Spannmutter umfasst, wobei eine Außenseite der Spannmutter im Wesentlichen kegelstumpfförmig bzw. konusförmig verläuft. Gegenüber dem Stand der Technik erweist es sich bei der erfindungsgemäßen Verbindungsvorrichtung als vorteilhaft, dass wegen der kraftschlüssigen Verbindung zwischen der Verbindungsvorrichtung mit der Innenseite der Ausnehmung auf ein Innengewinde in der Ausnehmung verzichtet werden kann. Die Ausnehmung ist somit vorteilhafterweise gewindefrei. Dadurch lässt sich in vorteilhafter Weise in der Herstellung der Radnabe ein Arbeitsschritt einsparen. Insbesondere ist es vorgesehen, dass die Verbindungsvorrichtung bzw. der in der Ausnehmung angeordnete Teil der Verbindungsvorrichtung im montierten Zustand in axialer Richtung kraft- bzw. reibschlüssig, vorzugsweise ausschließlich kraft- bzw. reibschlüssig, mit der Innenseite der Ausnehmung zusammenwirkt. Vorzugsweise ist die Ausnehmung in der Radnabe in einer senkrecht zur Radachse verlaufenden primären Schnittebene kreisförmig ausgestaltet. Eine solche Ausnehmung lässt sich in vorteilhafter Weise mittels einer einfachen Bohrung realisieren. Alternativ ist es auch vorstellbar, dass der Querschnitt der Ausnehmung polygonal, beispielsweise fünf- oder sechseckig, ausgestaltet ist, um ein Verdrehen der Verbindungsvorrichtung zu vermeiden. Hierzu ist die Außenkontur des Teils der Verbindungsvorrichtung, der im montierten Zustand in der Ausnehmung platziert ist, komplementär zum Verlauf der Innenseite der Ausnehmung ausgestaltet. Vorzugsweise sind die Außenkontur der Verbindungsvorrichtung und der Verlauf der Innenseite der Ausnehmung im Sinne eines Schlüssel-Schloss-Prinzips derart ausgestaltet, dass beim Einführen der Verbindungsvorrichtung in die Ausnehmung automatisch eine Ausrichtung der Verbindungsvorrichtung erfolgt, insbesondere eine Ausrichtung eines Teils der Verbindungsvorrichtung, der im montierten Zustand außerhalb der Ausnehmung angeordnet ist. Weiterhin ist es vorstellbar, dass die Ausnehmung in der Radnabe in axialer Richtung verjüngt, insbesondere konusförmig verjüngt, und der bei der Montage in der Ausnehmung zu platzierende Teil der Verbindungsvorrichtung zumindest bereichsweise entsprechend ausgestaltet ist.

Gemäß einer weiteren Ausführungsform der vorliegenden Erfindung ist es vorgesehen, dass die Ausnehmung in der Radnabe hinterschneidungsfrei, insbesondere gewindefrei, ausgestaltet ist und die Verbindungsvorrichtung in einem Grundzustand, vorzugsweise passgenau, in die Ausnehmung einführbar ist. Insbesondere ist ein Außenumfang der Verbindungsvorrichtung im Grundzustand zumindest bereichsweise kleiner als im Fixierzustand. Mit anderen Worten: Um für ein kraftschlüssiges Anliegen in der Ausnehmung zu sorgen, wird die Verbindungsvorrichtung so deformiert, dass ein kraftschlüssiger Kontakt mit der Innenseite der Ausnehmung entsteht. Besonderes bevorzugt ist es vorgesehen, dass die Verbindungsvorrichtung derart gestaltet ist, das sich in einer primären Schnittebene, die im montierten Zustand der Verbindungsvorrichtung senkrecht zur Radachse verläuft, zumindest entlang einer geschlossenen Linie am Außenumfang der Verbindungsvorrichtung eine kraftschlüssige Anbindung an die Innenseite der Ausnehmung erfolgt. Denkbar ist auch, dass die Bereiche, in denen eine kraftschlüssige Verbindung zwischen der Verbindungsvorrichtung und der Innenseite der Ausnehmung im Fixierzustand gebildet wird, unterbrochen sind. Dies wird beispielsweise durch in der Verbindungsvorrichtung im montierten Zustand axial verlaufende Schlitze realisiert. Bevorzugt ist in der primären Schnittebene das Verhältnis zwischen den Bereichen, in denen eine kraftschlüssige Anbindung an die Innenseite erfolgt zum gesamten Umfang der Innenseite der Ausnehmung in der primären Schnittebene zwischen 0,6 und 0,95, bevorzugt 0,75 bis 0,9 und besonders bevorzugt zwischen 0,83 und 0,87. Insbesondere hat sich für die Wertbereiche zwischen 0,83 und 0,87 gezeigt, dass sich eine stabile kraftschlüssige Anbindung einstellen lässt und sich die Verbindungseinrichtung bei der Überführung in den Fixierzustand gleichzeitig vergleichsweise einfach deformieren lässt.

Zweckmäßig ist es vorgesehen, dass die Verbindungsvorrichtung ein Adapterelement zur formschlüssigen Anbindung der Bremsscheibe an die Verbindungsvorrichtung aufweist. Insbesondere ist es vorgesehen, dass die im montierten Zustand der Bremsscheibe zugewandte Seite des Adapterelements zur Kopplung an die Bremsscheibe ausgestaltet ist. Dabei umfasst die Verbindungsvorrichtung einen adapterseitigen Kopplungsbereich, der komplementär zu einem bremsseitigen Kopplungsbereich ausgestaltet ist. Bevorzugt sind der adapterseitigen Kopplungsbereich und der bremsseitige Kopplungsbereich im Sinne eines Schlüssel-Schloss-Prinzips ausgestaltet. Dadurch lässt sich in vorteilhafter Weise sicherstellen, dass die für die jeweiligen Belastungen vorgesehene Bremsscheibe mit der entsprechenden Verbindungsvorrichtung verwendet wird.

Zweckmäßig ist es vorgesehen, dass das Adapterelement einen hülsenförmigen Primärbereich zur Einführung in die Ausnehmung aufweist. Der hülsenförmige Primärbereich erweist sich insbesondere als vorteilhaft, weil er einen Zugriff auf einen Hülseninnenraum und somit eine Deformation des innerhalb der Ausnehmung angeordneten Adapterelements nach außen zulässt. Dabei ist der Primärbereich vorzugsweise derart ausgestaltet, dass er sich vollständig in der Ausnehmung versenken lässt.

Weiterhin ist es vorstellbar, dass der hülsenförmige Primärbereich an seiner im montierten Zustand der Innenseite der Ausnehmung zugewandten Seite eine Oberflächenmodifikation aufweist, um die kraftschlüssige Verbindung nach der Deformation zu unterstützten. Vorzugsweise ist die Oberflächenmodifikation als Aufrauhung und/oder Rippenstruktur ausgestaltet. Beispielsweise steht die Rippenstruktur, beispielweise als umlaufende Nut, radial vom hülsenförmigen Primärbereich ab und umschließt diesen geschlossen oder unterbrochen. Dadurch lässt sich die Verbindung zwischen der Radnabe und der Bremsscheibe über die Verbindungsvorrichtung weiter verbessern.

Bevorzugt ist es vorgesehen, dass die Verbindungsvorrichtung ein Adapterelement mit mehreren Primärbereichen umfasst, wobei die Primärbereiche jeweils in eine Ausnehmung einführbar sind. Dadurch lassen sich mehrere Primärbereiche zeitgleich in mehrere Ausnehmungen einführen, wodurch die Montage der Verbindungsvorrichtung mit Vorteil vereinfacht wird.

Vorzugsweise ist es vorgesehen, dass die mehreren Primärbereiche über ein ringförmiges oder ringsegmentförmiges Trägerelement miteinander verbunden sind. Dabei stehen die hülsenförmigen Primärbereiche vorzugsweise im Wesentlichen senkrecht vom Trägerelement ab und sind entsprechend der jeweiligen Verteilung der Ausnehmungen in der Radnabe zueinander angeordnet. Zur Einsparung von Gewicht weist das Trägerelement in Umlaufrichtung gesehen zwischen den Primärbereichen vorzugsweise Leerräume auf. Vorstellbar ist auch, dass am Trägerelement mehrere Adapterelemente lösbar angeordnet sind. Dann lässt sich das Trägerelement bei der Montage für das simultane Einsetzen mehrerer Adapterelemente nutzen und anschließend nach dem Einsetzen und vor dem finalen Fixieren der Bremsscheibe wieder entfernen. Dadurch kann in vorteilhafter Weise Gewicht an der gefertigten Verbindung zwischen der Bremsscheibe und der Radnabe eingespart werden und gleichzeitig lässt sich die Montage beschleunigen, da simultan mehrere Primärbereiche in die Ausnehmungen einführbar sind.

Besonders bevorzugt ist es vorgesehen, dass die Verbindungsvorrichtung einen kragenförmigen Sekundärbereich zur formschlüssigen Anbindung der Bremsscheibe aufweist. Vorzugsweise liegt der kragenförmige Sekundärbereich im montierten Zustand mit einer Seite an der Radnabe und mit einer gegenüberliegenden Seite an der Bremsscheibe an. Mittels des kragenförmigen Sekundärbereichs lässt sich mit Vorteil eine größere Anschlussfläche für die Bremsscheibe bereitstellen als es mit dem durch die Ausnehmung begrenzten Primärbereich möglich ist. Zudem bildet der Sekundärbereich bei der Montage einen Anschlag, der den Monteur wissen lässt, dass der Primärbereich ausreichend weit in die Ausnehmung eingeführt ist.

In einer weiteren Ausführungsform der vorliegenden Erfindung ist es vorgesehen, dass der Sekundärbereich einen adapterelementseitigen Kopplungsbereich aufweist, der im montierten Zustand mit einem komplementär zum adapterelementseitigen Kopplungsbereich ausgestalteten bremsscheibenseitigen Kopplungsbereich formschlüssig zusammenwirkt, wobei der Sekundärbereich vorzugsweise im montierten Zustand in einer parallel zur Radachse und in einer senkrecht zur Radachse verlaufenden Richtung komplementär zum bremsscheibenseitigen Kopplungsbereich ausgestaltet ist. Beispielsweise umfasst der Sekundärbereich an seinem äußeren Umfang Halteelemente, die eine Hinterschneidung bilden, in die im montierten Zustand ein komplementäres Schienenelement eingreift. Besonders bevorzugt sind der adapterelementseitige und der bremsscheibenseitige Koppllungsbereich im Sinne einer Schwalbenschwanzverbindung ausgestaltet.

Bei der Verwendung der vorliegenden Erfindung könnte es vorgesehen sein, dass der hülsenförmige Primärbereich in einer primären Schnittebene, die im montierten Zustand der Verbindungsvorrichtung senkrecht zur Radachse verläuft, eine zweite Querschnittsfläche aufweist und die Ausnehmung durch ihre Innenseite parallel zur primären Schnittebene eine erste Querschnittsfläche definiert, wobei das Verhältnis der ersten Querschnittsfläche zur zweiten Querschnittsfläche einen Wert zwischen 1,1 und 1,7, bevorzugt 1,1 und 1,45 und besonders bevorzugt zwischen 1,1 und 1,25 annimmt. Dabei könnte die erste Querschnittsfläche durch den Verlauf der Innenseite der Ausnehmung festgelegt werden und die zweite Querschnittsfläche durch den Hülseninnenraum. d. h. die Innenseite des Primärbereichs. Es hat sich dabei gezeigt, dass sich mit dem Verhältnis zwischen 1,1 und 1,25 eine Wandstärke bereitstellen lässt, die sich zum einen für die Überführung in den Fixierzustand vergleichsweise einfach deformieren lässt und gleichzeitig ausreichend stabil ist, um den im Betrieb auftretenden Belastungen standzuhalten. Es könnte dabei vorgesehen werden, dass die erste Querschnittsfläche zwischen 60 und 150 mm² groß ist. Dadurch lässt sich bei einer spielpassgenauen Ausgestaltung des Primärbereichs mit Vorteil eine ausreichend große Außenfläche des Primärbereichs bereitstellen, mit der ein kraftschlüssiges Anbinden an die Innenseite der Ausnehmung möglich ist.

Zweckmäßig könnte vorgesehen sein, dass der kragenförmige Sekundärbereich entlang einer Querrichtung, die im montierten Zustand im Wesentlichen senkrecht zur Radachse verläuft, eine Erstreckungslänge aufweist, die 2 bis 20 -mal, vorzugsweise 4 bis 15 -mal und besonders bevorzugt 5 bis 8 -mal so groß ist wie eine in dieselbe Richtung bemessene Erstreckungslänge der Ausnehmung. Dadurch lässt sich mit Vorteil die Größe des Sekundärbereichs derart einstellen, dass bei der Montage ein vergleichsweise einfaches Aufziehen möglich ist.

Weiterhin ist es bevorzugt vorgesehen, dass sich der Primärbereich in einer parallel zur Radachse verlaufenden Richtung 2 bis 15-mal, vorzugsweise 5 bis 13-mal und besonders bevorzugt 8 bis 11-mal so weit erstreckt wie der Sekundärbereich. Mittels dieser Dimensionierung lässt sich zum einen sicherstellen, dass der Primärbereich eine ausreichend potentielle Kontaktfläche für eine kraftschlüssige Verbindung bereitstellt und zum anderen, dass die montierte Bremsscheibe möglichst nah an der Radnabe angeordnet ist.

Gemäß der vorliegenden Erfindung ist es vorgesehen, dass die Verbindungsvorrichtung eine Spannmutter umfasst. Die Spannmutter weist insbesondere eine Außenseite auf, die im Wesentlichen konusförmig bzw. egelstumpfförmig verläuft, wobei die Außenseite an einer ersten Stirnseite in der primären Schnittebene einen ersten Durchmesser, insbesondere Außendurchmesser, und an einer zweiten Stirnseite einen zweiten Durchmesser, insbesondere Außendurchmesser, aufweist, wobei die im montierten Zustand im Wesentlichen schräg zur Radachse verlaufende Außenseite zwischen der ersten Stirnseite und der zweiten Stirnseite verläuft. Dabei verläuft die Außenseite im montierten Zustand vorzugsweise unter Bildung eines Winkels zwischen 2° und 50°, bevorzugt zwischen 35° und 45° und besonderes bevorzugt zwischen 5° und 150° gegenüber der Radachse. Weiterhin kann vorgesehen sein, dass der erste Durchmesser kleiner ist als der zweite Durchmesser und insbesondere kleiner als ein Innendurchmesser des hülsenförmigen Primärbereichs, so dass die erste Stirnseite der Spannmutter bei der Montage ohne weiteres in die Öffnung an der Stirnseite des Primärbereichs eingreifen kann. Insbesondere gleitet die Öffnung des hülsenförmigen Primärbereichs bei der Montage entlang der Außenseite der Spannmutter. Die dabei entstehende Stemmwirkung drängt die Wandung des hülsenförmigen Primärbereichs nach außen und vergrößert dadurch den Außenumfang, wodurch schließlich die kraftschlüssige Anbindung an die Innenseite der Ausnehmung erfolgt. Weiterhin kann die Spannmutter eine im Wesentlichen zu ihrer Außenseite konzentrisch verlaufende Aufnahme mit einem Innengewinde umfassen. Ferner ist es vorstellbar, dass die Spannschraube eine Konusschraube ist. Hierbei umfasst die Spannschraube vorzugsweise einen zumindest teilweise konusförmigen bzw. kegelstumpfförmigen Schraubkopf. Insbesondere verjüngt der Schraubkopf in Richtung eines Gewindes, an dem eine Mutter aufgeschraubt werden kann. Der konusförmig bsw. kegelstumpfförmig ausgeformte Teil des Schraubkopfs übernimmt dann die oben beschriebene Funktionalität der konusförmigen Mutter und sorgt für die vorgesehene reibschlüssige Verbindung mit der Innenseite des Ausnehmung.

Zweckmäßigerweise kann die Verbindungsvorrichtung eine Niet oder ein Stiftelement umfassen. Insbesondere ist ein hülsenförmiges Aufnahmeelement vorstellbar, in das ein Niet oder ein Stiftelement bei der Montage der Verbindungsvorrichtung einschiebbar ist. Für die Montage wird beispielsweise das hülsenförmige Aufnahmeelement in der Ausnehmung der Radnabe platziert und anschließend die Niet oder das Stiftelement eingeschoben. Dabei ist es vorgesehen, dass beim Einschieben der Niet oder des Stiftelements eine Wandung des hülsenförmigen Aufnahmeelements nach außen gedrückt bzw. gewölbt wird, um kraftschlüssig mit der Innenseite der Ausnehmung zusammenzuwirken. Um diese Wölbung zu veranlassen, weist das Aufnahmeelement an seiner Innenseite beispielsweise Vorsprünge auf, die bei der Montage mit dem Stiftelement oder der Niet zusammenwirken, insbesondere kraftschlüssig und/oder formschlüssig, und so nach außen gedrückt werden. Weiterhin ist es vorstellbar, dass die Wandung des hülsenförmigen Aufnahmeelements eine Materialschwächung, beispielswiese in Form einer Verjüngung oder Perforation aufweist. Diese Materialschwächung ist vorzugsweise derart ausgelegt, dass sie eine Wölbung unterstützt. So lässt sich gezielt der Ort bestimmen, an dem die Wölbung beim Einschieben entsteht. So ist es vorstellbar, dass die Innenseite der Ausnehmung der Radnabe einen Rücksprung aufweist, in den die Wölbung nach dem Einschieben der Niet bzw. des Stiftelements eingreift. Dadurch lässt sich ein zusätzlicher Formschluss zwischen der Ausnehmung in der Radnabe und dem Verbindungsvorrichtung, insbesondere der Wölbung der Verbindungsvorrichtung, erzielen. Weiterhin ist es vorgesehen, dass die Wölbung am in der Ausnehmung versenkten Ende des Aufnahmeelements erzeugt wird. Insbesondere ist unter Wölbung jegliche Form von Abweichung des zylindrischen Umfangs des Aufnahmeelements zu verstehen. Es ist auch vorstellbar, dass das Ausnahmeelement an seinem in der Ausnehmung versenkten Ende aufspreitzt, vorzugsweise tulpenförmig aufspreizt. Die Nutzung von Stiftelement bzw. Niet hat den Vorteil, dass auch bei der Verbindungsvorrichtung auf ein Gewinde verzichtet und die Verbindung zwischen Radnabe und Bremsscheibe vergleichsweise schnell realisiert werden kann.

Vorzugsweise erfolgt die Verbindung zwischen der Radnabe und der Bremsscheibe ohne Mutter, d.h. mutterfrei. Dadurch lässt sich mit Vorteil auch Bauraum sparen, da nicht ein Platz bzw. Bauraum frei für die Mutter auf einer Seite der Bremsscheibe für die Mutter freigehalten werden muss.

Vorzugsweise ist es vorgesehen, dass die Verbindungsvorrichtung ein Fixierelement aufweist, das im Fixierzustand die Bremsscheibe und das Adapterelement durchgreift. Beispielsweise handelt es sich bei dem Fixierelement um eine Schraube, die mit ihrem Schraubenkopf an der Bremsscheibe anliegt, durch die Bremsscheibe und das Adapterelement hindurchgreift und bei der Montage in das Innengewinde bzw. in die Aufnahme mit dem Innengewinde der Spannmutter eingreift. Durch das Anziehen des Fixierelements wird die Bremsscheibe fixiert und in der Ausnehmung der Radnabe die Spannmutter in die Öffnung an der Stirnseite des Primärbereichs hineingezogen, wodurch das Vergrößern des Außenumfangs des hülsenförmigen Primärbereichs und damit das kraftschlüssige Anbinden mit der Innenseite der Ausnehmung veranlasst wird.

In einer weiteren Ausführungsform der vorliegenden Erfindung ist es vorgesehen, dass die Ausnehmung in der Radnabe im Wesentlichen parallel zu der Radachse, um die die Radnabe rotierbar gelagert bzw. lagerbar ist, erstreckt. Dabei versteht der Fachmann unter einer im Wesentlichen parallel zur Radachse verlaufenden Ausnehmungen insbesondere auch solche, die +/- 5° zur Radachse geneigt sind. Die im Wesentlichen parallel zur Radachse verlaufenden Ausnehmungen erweisen sich dabei besonders vorteilhaft, wenn die Verbindungsvorrichtung mehrere Primärbereiche aufweist, die sich dann auf einfache Weise mittels einer parallel zur Radachse verlaufenden Translationsbewegung in die Ausnehmungen zeitgleich einführen lassen. Insbesondere erweist sich dies als vorteilhaft, wenn die Verbindungvorrichtung mittels eines Roboters automatisch montiert wird.

Gemäß einer weiteren Ausführungsform der vorliegenden Erfindung ist es vorgesehen, dass sich ein Material, aus dem die Bremsscheibe gefertigt ist, von einem Material, aus dem die Radnabe gefertigt ist, unterscheidet, wobei die Bremsscheibe bevorzugt aus Grauguss und/oder die Radnabe aus einem Sphäroguss gefertigt ist.

Vorteilhafterweise ist es vorgesehen, dass das Material der Verbindungsvorrichtung zur thermischen Isolation zwischen Bremsscheibe und Radnabe ausgelegt ist, und/oder wobei die Verbindungsvorrichtung vorzugweise zumindest teilweise aus einem Edelstahl gefertigt ist. Insbesondere ist es vorgesehen, dass das Adapterelement aus einem Edelstahl gefertigt ist. Dadurch lässt sich eine wirkungsvolle thermische Isolation zwischen der Bremsscheibe und der Radnabe realisieren, durch die eine thermische Entkopplung zwischen der Bremsscheibe und der Radnabe erfolgen kann. Diese erweist sich wegen der beim Bremsen auftretenden Wärme bzw. Hitzentwicklung wiederum als besonders vorteilhaft.

Ein weiterer Gegenstand der vorliegenden Erfindung ist ein System aus einer Radnabe, einer Bremsscheibe und einer erfindungsgemäßen Verbindungsvorrichtung. Alle für die erfindungsgemäße Verbindungsvorrichtung beschriebenen Merkmale und deren Vorteile lassen sich sinngemäß ebenfalls auf das erfindungsgemäße System übertragen und andersherum.

Ein weiterer Gegenstand der vorliegenden Erfindung ist ein Verfahren zum Verbinden einer Bremsscheibe mit einer Radnabe mittels einer erfindungsgemäßen Verbindungsvorrichtung, umfassend die Schritte: Einführen der Verbindungsvorrichtung in eine Ausnehmung der Radnabe und Überführen der Verbindungsvorrichtung in den Fixierzustand, in dem die Verbindungsvorrichtung kraftschlüssig mit der Ausnehmung wirkt. Alle für die erfindungsgemäße Verbindungsvorrichtung beschriebenen Merkmale und deren Vorteile lassen sich sinngemäß ebenfalls auf das erfindungsgemäße Verfahren übertragen und andersherum.

Es zeigt:
- Fig. 1: eine Verbindungsvorrichtung gemäß einer ersten beispielhaften Ausführungsform der vorliegenden Erfindung
- Fig. 2: eine Verbindungsvorrichtung gemäß einer zweiten beispielhaften Ausführungsform der vorliegenden Erfindung.

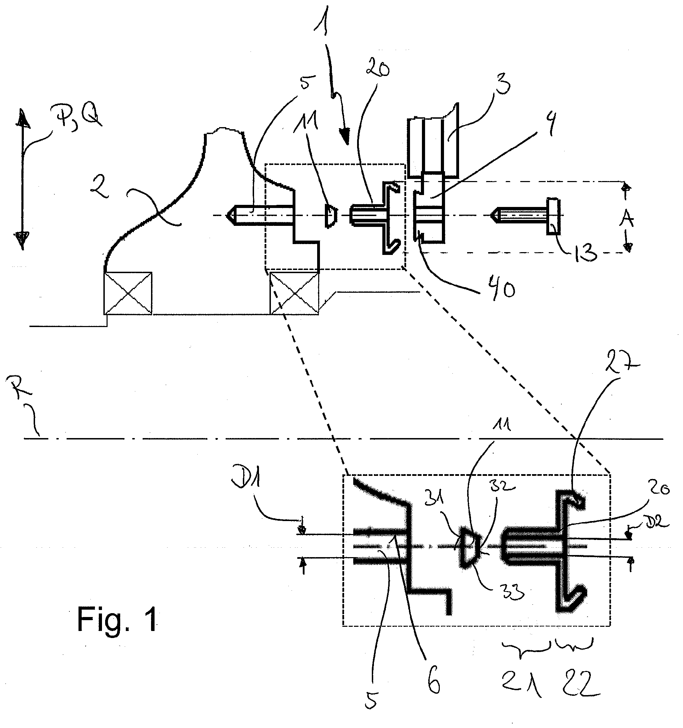

In der **Figur 1** ist eine Verbindungsvorrichtung 1 gemäß einer ersten beispielhaften Ausführungsform der vorliegenden Erfindung dargestellt. Insbesondere handelt es sich bei der Verbindungsvorrichtung 1 um eine solche Verbindungsvorrichtung, mit der eine Bremsscheibe 3 mit einer Radnabe 2 drehfest verbunden wird. Vorzugsweise sind die Bremsscheibe 3 und die Radnabe 2 wesentliche Bestandteile einer Radlagereinrichtung für ein Achsaggregat, insbesondere ein Achsaggregat für ein Nutzfahrzeug. Dabei lässt sich einer Radlagereinrichtung eine Radachse R zuordnen, um die die Radnabe 2 und die drehfest mit der Radnabe 2 verbundene Bremsscheibe 3 rotierbar gelagert sind. Durch die auf die Bremsscheibe 3 wirkenden Scherkräfte beim Bremsen werden vergleichsweise hohe Anforderungen an die Verbindung zwischen der Bremsscheibe 3 und der Radnabe 2 und damit an die die Bremsscheibe 3 und die Radnabe 2 verbindende Verbindungsvorrichtung 1 gestellt. Insbesondere ist es vorgesehen, dass die Verbindungsvorrichtung 1 derart ausgestaltet ist, dass sie im montierten Zustand zumindest teilweise in einer Ausnehmung 5 eingreift. Es hat sich hierbei als besonders vorteilhaft für die Herstellung der Radnabe 2 erwiesen, wenn auf den Arbeitsschritt, mit dem ein Gewinde bzw. eine Hinterschneidung in der Ausnehmung erzeugt wird, verzichtet werden kann. Um dennoch für eine ausreichend stabile, den Belastungen genügende und dauerhafte Befestigung der Verbindungsvorrichtung 1 in der hinterscheidungsfreien, insbesondere gewindefreien, Ausnehmung 5 in der Radnabe 2 zu sorgen, ist es vorgesehen, dass die Verbindungsvorrichtung 1 in einem Grundzustand in die Ausnehmung 5 einführbar ist und die in der Ausnehmung 5 zumindest teilweise platzierte Verbindungseinrichtung 1 in einen Fixierzustand überführbar ist, in dem die Verbindungsvorrichtung 1 in einem montierten Zustand in axialer Richtung kraft- bzw. reibschlüssig, insbesondere in axialer Richtung ausschließlich kraft- bzw. reibschlüssig, mit der Ausnehmung 5 zusammenwirkt. Insbesondere wirkt die Verbindungsvorrichtung 1 mit einer Innenseite 6 der Ausnehmung 5 kraftschlüssig zusammen. Weiterhin ist es besonders vorteilhaft, wenn die Verbindungvorrichtung 1 einen Adapterelement 20 mit einem hülsenförmigen Primärbereich 21 und einem kragenförmigen Sekundärbereich 22 aufweist. Dabei ist der hülsenförmige Primärbereich 21 zur formschlüssigen Anbindung an die Innenseite 6 der Ausnehmung 5 vorgesehen. Hierzu ist im Grundzustand der Verbindungvorrichtung 1 ein Außenumfang des Primärbereichs 21 derart ausgestaltet, dass der Primärbereich 21 mit Spiel passgenau in die Ausnehmung 5 einführbar ist. Insbesondere ist der Primärbereich 21 derart dimensioniert, dass im montierten Zustand der Primärbereich 21 in die Ausnehmung 5 vollständig versenkbar ist und der sich unmittelbar an den Primärbereich 21 anschließende Sekundärbereich 22 an der Radnabe 2 mit einer Seite flächig anliegt.

Um eine kraftschlüssige Anbindung an die Innenseite 6 der Ausnehmung 5 zu realisieren, ist es insbesondere vorgesehen, dass ein Außenumfang des Primärbereichs 21 zumindest bereichsweise beim Übergang in den Fixierzustand vergrößert wird und dadurch eine kraftschlüssige Verbindung mit der Innenseite 6 der Ausnehmung 5 eingeht. Zur Vergrößerung des Außenumfangs ist insbesondere eine Spannmutter 11 vorgesehen, die bei der Montage innerhalb der Ausnehmung 5 an der Stirnseite des Primärbereichs 21, insbesondere an der dem Sekundärbereich 22 gegenüberliegenden Stirnseite des Primärbereichs 21, anliegt. Bei der Überführung in den Fixierzustand wird die Spannmutter 11 in einen stirnseitigen Öffnungsbereich des hülsenförmigen Primärbereich 21 eingezogen, woraufhin eine Wandung des Primärbereichs 21 nach außen gedrückt wird und so die kraftschlüssige Verbindung mit der Innenseite 6 der Ausnehmung 5 veranlasst. Hierbei ist es besonders bevorzugt vorgesehen, dass eine Außenseite 33 der Spannmutter 11 kegelstumpfförmig bzw. konusförmig ausgestaltet ist. Dabei weist die Spannmutter 11 an einer ersten Stirnseite 31 einen ersten Durchmesser D1 auf und auf einer der ersten Stirnseite 31 gegenüberliegenden zweiten Stirnseite 32 einen zweiten Durchmesser D2, wobei eine im montierten Zustand im Wesentlichen schräg zur Radachse R verlaufende Außenseite 33 bzw. -fläche zwischen der ersten Stirnseite 31 und der zweiten Stirnseite 32 vorgesehen ist. Dabei verläuft die Außenseite 33 im montierten Zustand unter Bildung eines Winkels zwischen 2° und 50°, bevorzugt zwischen 30° und 45° und besonderes bevorzugt zwischen 5° und 15° schräg gegenüber der Radachse. Weiterhin ist es vorgesehen, dass die erste Stirnseite 31 bei der Montage anliegt und der erste Durchmesser D1 kleiner ist als der zweite Durchmesser D2 und insbesondere kleiner als ein Innendurchmesser des hülsenförmigen Primärbereichs 21, so dass die erste Stirnseite 31 der Spannmutter 11 ohne Weiteres in die Öffnung an der Stirnseite des Primärbereichs 21 bei der Montage eingreifen kann. Weiterhin umfasst die Spannmutter 11 einen im Wesentlichen zu ihrer Außenseite 33 konzentrisch verlaufende Aufnahme mit Innengewinde, die im montierten Zustand und bei der Überführung in den Fixierzustand in axialer Richtung formschlüssig mit einem in den Hülseninnenraum eingeführten Fixierelement 13 zusammenwirkt. Das Fixierelement 13 durchgreift dabei nicht nur das Adapterelement 20, sondern auch einen Anschlussbereich 4 der Bremsscheibe 3. In der dargestellten Ausführungsform ist das Fixierelement 13 eine Schraube, deren Schraubenkopf im montierten Zustand in axialer Richtung formschlüssig mit der Bremsscheibe 1 zusammenwirkt.

Weiterhin ist es vorgesehen, dass der Sekundärbereich 22 zur formschlüssigen Anbindung der Bremsscheibe 3 vorgesehen ist. Insbesondere bildet der kragenförmige Sekundärbereich 22 auf der der Bremsscheibe 3 zugewandten Seite eine Hinterschneidung aus, die mit einem komplementär ausgestalteten Schienenelement 40 im montierten Zustand in axialer Richtung formschlüssig zusammenwirkt. Vorzugsweise ist der kragenförmige Sekundärbereich 22 sowohl in einer im montierten Zustand axial verlaufenden als auch in einer im montierten Zustand radial verlaufenden Richtung komplementär zum Schienenelement 40 ausgestaltet. Hierzu weist der kragenförmig ausgestaltete Sekundärbereich 22 an seinem äußersten Umfang ein Halteelement 27 auf. Im vorliegenden Ausführungsbeispiel ist das Halteelement 27 bordürenförmig ausgestaltet und verläuft im montieren Zustand beginnend am äußeren Umfang des kragenförmigen Sekundärbereichs 22 radial nach innen gerichtet schräg zur Radachse.

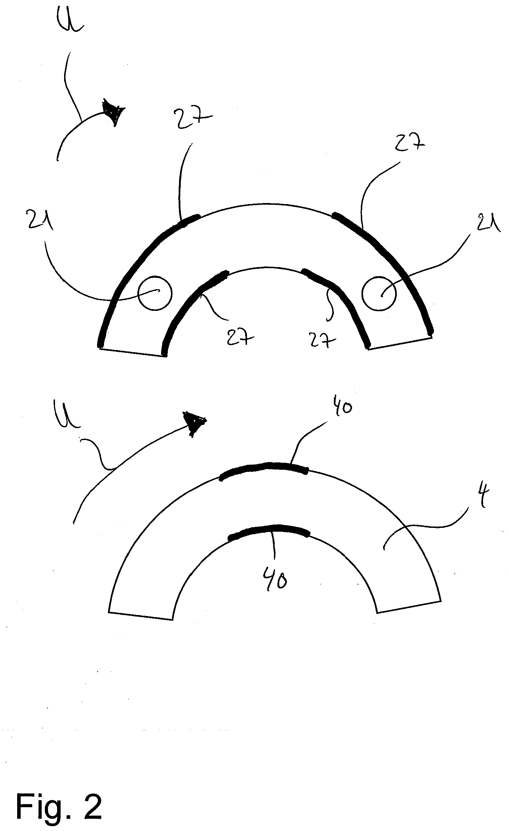

In der **Figur 2** ist eine Verbindungsvorrichtung 1 gemäß einer zweiten beispielhaften Ausführungsform der vorliegenden Erfindung dargestellt. Insbesondere ist es hierbei vorgesehen, dass der Sekundärbereich 22 als ein Trägerelement mit mehreren in Umlaufrichtung gesehen zueinander versetzten Primärbereichen 21 ausgestaltet ist, wobei die zueinander versetzten Primärbereiche 21 derart angeordnet sind, dass sie simultan jeweils in eine Ausnehmung 5 einführbar sind. Das Halteelement 27 des Adapterelements 20 und das Schienenelement 40 der Bremsscheibe 3 sind in Umlaufrichtung gesehen dabei bereichsweise unterbrochen, um bei der Montage ein in Umlaufrichtung erfolgendes Einschieben des Schienenelements 30 der Bremsscheibe 3 zu ermöglichen. Mit anderen Worten wird zeitlich vor der Einführung des Fixierungselements 13 die Bremsscheibe 3 gegenüber dem in der Ausnehmung 5 teilweise angeordneten Adapterelement 20 verdreht bis eine Öffnung im Anschlussberiech 4 der Bremsscheibe 3 fluchtend zur Ausnehmung 5 in der Radnabe 2 angeordnet ist. Besonders bevorzugt sind der adapterelementseitige und der bremsscheibenseitige Kopplungsbereich zumindest bereichsweise im Sinne einer Schwalbenschwanzverbindung ausgestaltet.

### Bezugszeichen

- 1: Verbindungsvorrichtung
- 2: Radnabe
- 3: Bremsscheibe
- 4: Anschlussbereich
- 5: Ausnehmung
- 6: Innenseite
- 11: Spannmutter
- 13: Fixierelement
- 20: Adapterelement
- 21: Primärbereich
- 22: Sekundärbereich
- 27: Halteelement
- 31: zweite Stirnseite
- 32: erste Stirnseite
- 33: Außenseite
- 40: Schienenelement
- D1: erste Querschnittsfläche
- D2: zweite Querschnittsfläche
- A: Erstreckungslänge
- P: primäre Schnittebene
- Q: Querrichtung

## Patentansprüche

1. Verbindungsvorrichtung (1) zum Verbinden einer Bremsscheibe (3) mit einer Radnabe (2), wobei die Verbindungsvorrichtung (1) zumindest teilweise in zumindest einer Ausnehmung (5) der Radnabe (2) anordbar ist und in einen Fixierzustand, in dem die Verbindungsvorrichtung (1) kraftschlüssig mit der Ausnehmung (5) zusammenwirkt, überführbar ist, **dadurch gekennzeichnet, dass** die Verbindungsvorrichtung (1) eine Spannmutter (11) umfasst, wobei eine Außenseite (33) der Spannmutter (11) im Wesentlichen kegelstumpfförmig bzw. konusförmig verläuft.

2. Verbindungsvorrichtung (1) gemäß Anspruch 1, wobei die Ausnehmung (5) in der Randnabe (2) hinterschneidungsfrei, insbesondere gewindefrei, ausgestaltet ist und die Verbindungsvorrichtung (1) in einem Grundzustand, vorzugsweise passgenau, in die Ausnehmung (5) einführbar ist.

3. Verbindungsvorrichtung (1) gemäß einem der vorhergehenden Ansprüche, wobei die Verbindungsvorrichtung (1) ein Adapterelement (20) zur formschlüssigen Anbindung der Bremsscheibe (3) an die Verbindungsvorrichtung (1) aufweist.

4. Verbindungsvorrichtung (1) gemäß Anspruch 3, wobei das Adapterelement (20) einen hülsenförmigen Primärbereich (21) zur Einführung in die Ausnehmung (5) aufweist.

5. Verbindungsvorrichtung (1) gemäß einem der vorhergehenden Ansprüche, wobei die Verbindungsvorrichtung (1) ein Adapterelement mit mehreren Primärbereichen (21) umfasst, wobei die Primärbereiche (21) jeweils in eine Ausnehmung (5) der Radnabe (2) einführbar sind.

6. Verbindungsvorrichtung (1) gemäß Anspruch 5, wobei die mehreren Primärbereiche (21) über ein ringförmiges oder ringsegmentförmiges Trägerelement miteinander verbunden sind.

7. Verbindungsvorrichtung (1) gemäß einem der vorhergehenden Ansprüche, wobei die Verbindungsvorrichtung (1) einen kragenförmigen Sekundärbereich (22) zur formschlüssigen Anbindung der Bremsscheibe (3) aufweist.

8. Verbindungsvorrichtung (1) gemäß einem der vorhergehenden Ansprüche, wobei die Verbindungsvorrichtung (1) ein Niet oder ein Stiftelement umfasst.

9. Verbindungsvorrichtung (1) gemäß einem der vorhergehenden Ansprüche, wobei die Verbindungsvorrichtung (1) ein Fixierelement (13) aufweist, das im Fixierzustand die Bremsscheibe (3) und das Adapterelement (20) durchgreift.

10. Verbindungsvorrichtung (1) gemäß einem der vorhergehenden Ansprüche 3 bis 9, wobei sich die Ausnehmung (5) in der Radnabe (2) im Wesentlichen parallel zu der Radachse (R), um die die Radnabe (2) rotierbar gelagert ist, erstreckt.

11. Verbindungsystem, umfassend eine Verbindungsvorrichtung (1) gemäß einem der vorhergehenden Ansprüche, eine Bremsscheibe (3) und eine Radnabe (2), wobei sich ein Material, aus dem die Bremsscheibe (3) gefertigt ist, von einem Material, aus dem die Radnabe (2) gefertigt ist, unterscheidet, wobei die Bremsscheibe (3) aus Grauguss und/oder die Radnabe (2) aus einem Sphäroguss gefertigt ist.

12. Verbindungsystem, gemäß Anspruch 11, wobei das Material der Verbindungsvorrichtung (1) zur thermischen Isolation zwischen Bremsscheibe (3) vorzugsweise und Radnabe (2) ausgelegt ist, und/oder wobei die Verbindungsvorrichtung (1) vorzugweise zumindest teilweise aus einem Edelstahl gefertigt ist.

13. Verfahren zum Verbinden einer Bremsscheibe (3) mit einer Radnabe (2) mittels einer Verbindungsvorrichtung (1) gemäß einem der Ansprüche 1 bis 10, umfassend die Schritte:
Einführen der Verbindungsvorrichtung (1) in eine Ausnehmung (5) der Radnabe (2) und
Überführen der Verbindungsvorrichtung (1) in den Fixierzustand, in dem die Verbindungsvorrichtung (1) kraftschlüssig mit der Ausnehmung (5) wirkt.

## Claims

1. A connection device (1) for connecting a brake disk (3) to a wheel hub (2),
wherein the connection device (1) is arrangeable at least in part in at least one recess (5) of the wheel hub (2) and is transferable into a fixed state in which the connection device (1) interacts in a non-positive locking manner with the recess (5),
**characterized in that**
the connection device (1) includes a clamping nut (11), wherein an outer side (33) of the clamping nut (11) is substantially truncated cone or cone shaped.

2. The connection device (1) as claimed in claim 1, wherein the recess (5) in the wheel hub (2) is designed free of undercuts, in particular free of threads, and the connection device (1) is insertable into the recess (5), preferably with a precision fit, in a basic state.

3. The connection device (1) as claimed in one of the preceding claims, wherein the connection device (1) comprises an adapter element (20) for the positive locking attachment of the brake disk (3) to the connection device (1).

4. The connection device (1) as claimed in claim 3, wherein the adapter element (20) comprises a sleeve-shaped primary region (21) for insertion into the recess (5).

5. The connection device (1) as claimed in one of the preceding claims, wherein the connection device (1) includes an adapter element with multiple primary regions (21), wherein the primary regions (21) are each insertable into a recess (5) of the wheel hub (2).

6. The connection device (1) as claimed in claim 5, wherein the multiple primary regions (21) are connected to one another by means of a ring-shaped or ring-segment-shaped carrier element.

7. The connection device (1) as claimed in one of the preceding claims, wherein the connection device (1) comprises a collar-shaped secondary region (22) for the positive locking attachment of the brake disk (3).

8. The connection device (1) as claimed in one of the preceding claims, wherein the connection device (1) includes a rivet or a pin element.

9. The connection device (1) as claimed in one of the preceding claims, wherein the connection device (1) comprises a fixing element (13) which, in the fixed state, reaches through the brake disk (3) and the adapter element (20).

10. The connection device (1) as claimed in one of the preceding claims 3 to 9, wherein the recess (5) in the wheel hub (2) extends substantially parallel to the wheel axle (R), about which the wheel hub (2) is rotatably mounted.

11. A connection system, including a connection device (1) as claimed in one of the preceding claims, a brake disk (3) and a wheel hub (2), wherein a material from which the brake disk (3) is produced differs from a material from which the wheel hub (2) is produced, wherein the brake disk (3) is produced from grey cast iron and/or the wheel hub (2) from a spheroidal graphite iron.

12. The connection system as claimed in claim 11, wherein the material of the connection device (1) is designed for thermal insulation between brake disk (3) preferably and wheel hub (2), and/or wherein the connection device (1) is preferably produced at least in part from a high-grade steel.

13. A method for connecting a brake disk (3) to a wheel hub (2) by means of a connection device (1) as claimed in one of claims 1 to 10, said method including the steps:
introduce the connection device (1) into a recess (5) of the wheel hub (2) and
transfer the connection device (1) into the fixed state in which the connection device (1) acts in a non-positive locking manner with the recess (5).

## Revendications

1. Dispositif de liaison (1) pour relier un disque de frein (3) à un moyeu de roue (2), le dispositif de liaison (1) pouvant être disposé au moins partiellement dans un moins un évidement (5) du moyeu de roue (2) et pouvant être transféré jusque dans un état de fixation dans lequel le dispositif de liaison (1) coopère par coopération de force avec l'évidement (5),
**caractérisé en ce que**
le dispositif de liaison (1) comprend un écrou de serrage (11), un côté extérieur (33) de l'écrou de serrage (11) s'étendant sensiblement en forme de tronc de cône ou en forme de cône.

2. Dispositif de liaison (1) selon la revendication 1,
dans lequel
l'évidement (5) dans le moyeu de roue (2) est réalisé sans contre-dépouille, en particulier sans filetage, et le dispositif de liaison (1) peut être inséré dans l'évidement (5) dans un état de base, en particulier avec ajustement.

3. Dispositif de liaison (1) selon l'une des revendications précédentes,
dans lequel
le dispositif de liaison (1) comprend un élément adaptateur (20) pour le raccordement du disque de frein (3) par coopération de forme au dispositif de liaison (1).

4. Dispositif de liaison (1) selon la revendication 3,
dans lequel
l'élément adaptateur (20) comprend une zone primaire (21) en forme de manchon pour l'insertion dans l'évidement (5).

5. Dispositif de liaison (1) selon l'une des revendications précédentes, dans lequel
le dispositif de liaison (1) comprend un élément adaptateur ayant plusieurs zones primaires (21), les zones primaires (21) pouvant être insérées chacune dans un évidement (5) du moyeu de roue (2).

6. Dispositif de liaison (1) selon la revendication 5,
dans lequel
lesdites plusieurs zones primaires (21) sont reliées entre elles par un élément porteur en forme annulaire ou en forme de segment d'anneau.

7. Dispositif de liaison (1) selon l'une des revendications précédentes,
dans lequel
le dispositif de liaison (1) comprend une zone secondaire (22) en forme de collerette pour le raccordement du disque de frein (3) par coopération de forme.

8. Dispositif de liaison (1) selon l'une des revendications précédentes,
dans lequel
le dispositif de liaison (1) comprend un rivet ou un élément formant tige.

9. Dispositif de liaison (1) selon l'une des revendications précédentes,
dans lequel
le dispositif de liaison (1) comprend un élément de fixation (13) qui, dans l'état de fixation, traverse le disque de frein (3) et l'élément adaptateur (20).

10. Dispositif de liaison (1) selon l'une des revendications précédentes 3 à 9,
dans lequel
l'évidement (5) dans le moyeu de roue (2) s'étend sensiblement parallèlement à l'axe de roue (R) autour duquel le moyeu de roue (2) est monté mobile en rotation.

11. Système de liaison comprenant un dispositif de liaison (1) selon l'une des revendications précédentes, un disque de frein (3) et un moyeu de roue (2),
dans lequel
un matériau dont consiste le disque de frein (3) se distingue d'un matériau dont consiste le moyeu de roue (2),
le disque de frein (3) est fabriqué en fonte grise et/ou le moyeu de roue (2) est fabriqué en fonte nodulaire.

12. Système de liaison selon la revendication 11,
dans lequel
le matériau du dispositif de liaison (1) est conçu de préférence pour l'isolation thermique entre le disque de frein (3) et le moyeu de roue (2), et/ou
le dispositif de liaison (1) est fabriqué de préférence au moins partiellement en acier inoxydable.

13. Procédé de liaison d'un frein de disque (3) à un moyeu de roue (2) au moyen d'un dispositif de liaison (1) selon l'une des revendications 1 à 10, comprenant les étapes consistant à :
insérer le dispositif de liaison (1) dans un évidement (5) du moyeu de roue (2), et
transférer le dispositif de liaison (1) dans l'état de fixation dans lequel le dispositif de liaison (1) coopère avec l'évidement (5) par coopération de force.
